# NEUE EUROPÄISCHE PATENTSCHRIFT

(11) **EP 3 785 538 B2**
(45) Veröffentlichungstag und Bekanntmachung des Hinweises auf die Entscheidung über den Einspruch: **04.03.2026**
(45) Hinweis auf die Patenterteilung: 12.07.2023
(21) Anmeldenummer: 20401048.2
(22) Anmeldetag: 24.08.2020
(51) Int. Cl.: A01M 7/00, A01M 21/04

(54) **VORRICHTUNG UND VERFAHREN ZUR BEDARFSGERECHTEN PFLANZENBEHANDLUNG**
DEVICE AND METHOD FOR PLANT TREATMENT BASED ON REQUIREMENTS
DISPOSITIF ET PROCÉDÉ DE TRAITEMENT DES PLANTES EN FONCTION DES BESOINS

(30) Priorität: 30.08.2019 DE 102019123328
(43) Veröffentlichungstag der Anmeldung: 03.03.2021
(73) Patentinhaber: Amazonen-Werke H. Dreyer SE & Co. KG, 49205 Hasbergen (DE)
(72) Erfinder: Kühn, Christoph, 49186 Bad Iburg (DE); Heer, Jochen, 49074 Osnabrück (DE); Trentmann, Markus, 49134 Wallenhorst (DE); Siltmann, Alexander, 49088 Osnabrück (DE)
(74) Vertreter: Grünecker Patent- und Rechtsanwälte PartG mbB

(56) Entgegenhaltungen:
- EP-A1- 3 262 934
- WO-A1-2006/021207
- WO-A1-2010/083496
- WO-A1-2013/134480
- WO-A1-2017/011595
- WO-A1-99/17606
- WO-A2-2015/142190
- WO-A2-2015/181642
- CN-A- 109 414 005
- DE-A1- 102014 226 189
- JP-A- 2001 292 684
- US-A1- 2017 112 118
- US-B2- 10 209 179
- US-B2- 7 103 451
- WANG ET AL.: "A Review on Weed Detection Using Ground-Based Machine Vision and Image Processing Techniques", COMPUTERS AND ELECTRONICS IN AGRICULTURE, vol. 158, 14 February 2019 (2019-02-14), pages 226 - 240, XP085612539, ISSN: 0168-1699, Retrieved from the Internet <URL:https://doi.org/10.1016/j.compag. 2019.02.00 5 .> DOI: 10.1016/j.compag.2019.02.005

## Beschreibung

Die Erfindung betrifft eine landwirtschaftliche Maschine zur bedarfsgerechten Pflanzenbehandlung gemäß dem Oberbegriff des Patentanspruches 1 sowie ein Verfahren gemäß dem Oberbegriff des Patentanspruchs 9.

Zur Pflege eines Nutzpflanzenbestandes auf einer landwirtschaftlichen Nutzfläche ist eine Behandlung von Pflanzen unerlässlich. Dabei kann eine Behandlung von unerwünschten Pflanzen ebenso vorgesehen sein, wie die Behandlung der Nutzpflanzen selbst. Unerwünschte Pflanzen können dabei über die Ausbringung eines pflanzenschädigenden Wirkmittels, beispielsweise in Form eines Herbizids, mechanisch oder thermisch bekämpft werden. Nutzpflanzen können dabei über die Ausbringung eines das Pflanzenwachstum begünstigenden Wirkmittels, beispielsweise in Form eines Düngemittels, eines Fungizids oder eines Insektizids behandelt werden.

Oft wird eine derartige Behandlung flächendeckend vorgenommen, sodass große Flächenbereiche unnötig behandelt werden. Es kommt dadurch zu einer zeit- und/oder kostenintensiven Überbehandlung sowie, insbesondere bei der Ausbringung von Wirkmitteln, zu einer vermeidbaren erheblichen Umweltbelastung.

Um diese Nachteile zu vermeiden, wird im Stand der Technik eine bedarfsgerechte Behandlung vorgeschlagen.

Die DE 10 2016 005 023 A1 beschreibt dazu die Erfassung des Untergrunds mittels einer Kamera. Wenn mittels dieser ein Bedarf erkannt wird, wir über eine Auswerteeinrichtung an dem entsprechenden Ort die Ausbringung eines Wirkmittels veranlasst.

Ein ähnliches Vorgehen offenbart die DE 41 32 637 C2. Mittels optischer Sensoren und einer spektralen Auswertung der erfassten Daten wird als Basis für eine Behandlung ein Unkrautbedeckungsgrad ermittelt. Basierend auf Schwellenwerten wird eine Behandlung ausgelöst.

Der Stand der Technik gibt somit lediglich an, dass eine Erkennung eines Behandlungsbedarfs optisch erfolgen kann.

Darüber hinaus offenbart die WO 99/17606 A1 eine landwirtschaftliche Maschine bei der die Auswerteeinrichtung dazu konfiguriert ist, den von der Erfassungseinrichtung erfassten Flächenbereich in Unterbereiche zu unterteilen und zumindest einen Unterbereich zu identifizieren, in dem eine Ansteuerung zumindest eines Behandlungsorgans erforderlich ist.

Der Stand der Technik gibt somit des Weiteren an, wo eine Behandlung der Pflanzen entlang der Nutzfläche mittels der Behandlungsorgane stattzufinden hat.

Der vorliegenden Erfindung liegt daher die Aufgabe zugrunde, einen erkannten Behandlungsbedarf einer Behandlungsorgane ansteuernden Steuereinrichtung in ökonomischer und ressourcensparender Weise zuzuführen.

Die Aufgabe der Erfindung wird durch die kennzeichnenden Merkmale des Patentanspruchs 1 gelöst. Vorteilhafte Ausführungen sind in den Unteransprüchen beschrieben.

Es ist erfindungsgemäß vorgesehen, dass die Auswerteeinrichtung konfiguriert ist,
- den von der Erfassungseinrichtung erfassten Flächenbereich in Unterbereiche zu unterteilen,
- zumindest einen Unterbereich zu identifizieren, in dem eine Ansteuerung zumindest eines Behandlungsorgans erforderlich ist,
- ausgehend von einem Ausgangspunkt, bevorzugt für jeden Unterbereich, besonders bevorzugt für jeden identifizierten Unterbereich einen zeitlichen und/oder räumlichen Abstand zu einem Punkt zu bestimmen, an dem eine Ansteuerung des zumindest einen Behandlungsorgans durchzuführen ist.

Eine erfindungsgemäße landwirtschaftliche Maschine kann zur mechanischen oder thermischen Behandlung von Pflanzen, insbesondere als Hackmaschine, ausgeführt sein. In einem solchen Fall sind die Behandlungsorgane als Werkzeuge zur mechanischen oder thermischen Pflanzenbehandlung, insbesondere als Hackwerkzeuge, ausgeführt.

Eine erfindungsgemäße landwirtschaftliche Maschine kann als Ausbringmaschine zur Ausbringung von Wirkmitteln ausgeführt sein. Die Wirkmittel können in fester, beispielsweise granularer, oder flüssiger Form vorliegen und wenigstens einen Wirkstoff enthalten. Im Fall einer Ausbringmaschine sind die Behandlungsorgane als Ausbringorgane ausgeführt. Bevorzugt ist die landwirtschaftliche Maschine als Feldspritze ausgeführt.

Ist die landwirtschaftliche Maschine als Ausbringmaschine, insbesondere als Feldspritze, ausgeführt, können die als Ausbringorgane ausgeführten Behandlungsorgane jeweils eine oder - als Mehrfachdüse - mehrere Düsen umfassen. Die Düsen sind zur zerstäubenden Abgabe flüssiger Wirkmittel eingerichtet. Die Düsen können untereinander gleiche oder - insbesondere als Düsen von Mehrfachdüsen - unterschiedliche Eigenschaften aufweisen. Es können auch mehrere Düsen oder Mehrfachdüsen zu einer Teilbreite zusammengefasst sein; in diesem Fall können die Teilbreiten als Behandlungsorgane aufgefasst werden.

Es kann überdies eine Kombination der zuvor aufgeführten Maschinentypen unter die vorliegende Erfindung fallen. Auch kann eine Maschine mehrere Arten von Behandlungsorganen aufweisen.

Die Behandlungsorgane sind an einem Rahmen oder einem Gestänge der Maschine angebracht und zumindest in Arbeitsstellung lateral zu einer Vortriebsrichtung der Maschine angeordnet. Die Behandlungsorgane sind untereinander in festgelegten, vorzugsweise gleichmäßigen, Abständen angeordnet.

Die Maschine umfasst zumindest eine Erfassungseinrichtung, welche an einer festgelegten Position des Rahmens oder des Gestänges angeordnet ist. Die zumindest eine Erfassungseinrichtung weist eine festgelegte Position und/oder Ausrichtung zu dem vor den Behandlungsorganen befindlichen Flächenbereich der landwirtschaftlichen Nutzfläche auf. Die zumindest eine Erfassungseinrichtung ist eingerichtet, einen in Vortriebsrichtung vor den Behandlungsorganen befindlichen Flächenbereich der landwirtschaftlichen Nutzfläche zu erfassen. Dabei erzeugt die zumindest eine Erfassungseinrichtung einen, bevorzugt zweidimensionalen, Datensatz, der Eigenschaften des vor den Behandlungsorganen befindlichen Flächenbereichs umfasst. Sämtliche Abbildungseigenschaften der Erfassungseinrichtung sind bekannt.

Die Maschine umfasst eine Auswerteeinrichtung zur Auswertung der von der zumindest einen Erfassungseinrichtung erfassten Daten. Die Auswerteeinrichtung ist erfindungsgemäß konfiguriert, den erfassten Flächenbereich in Unterbereiche zu unterteilen. Zusätzlich ist erfindungsgemäß vorgesehen, dass die Auswerteeinrichtung zumindest einen Unterbereich identifiziert, in dem die Ansteuerung eines Behandlungsorgans erforderlich ist.

Eine Ansteuerung eines Behandlungsorgans kann beispielsweise bei Maschinen zur mechanischen Pflanzenbehandlung eine geeignete Positionierung eines Werkzeugs umfassen. Bei Ausbringmaschinen kann eine Ansteuerung eines Behandlungsorgans ein Aktivieren, ein Deaktivieren, ein Anpassen einer Ausbringrate und/oder ein Anpassen einer Ausbringcharakteristik umfassen. Ein Behandlungsorgan kann sich somit in verschiedenen Ansteuerungszuständen befinden.

Ein Erfordernis zur Ansteuerung ergibt sich aus einer Auswertung der Eigenschaften des erfassten Flächenbereichs. Die Auswerteeinrichtung ist eingerichtet, aus diesen Eigenschaften innerhalb des erfassten Flächenbereichs die Anwesenheit und/oder die Position zu behandelnder Pflanzen abzuleiten. Dabei können Art, Menge, Dichte, Verteilung oder andere relevante Parameter die zu behandelnden Pflanzen betreffend abgeleitet werden. Dies kann über eine spektrale Auswertung, eine Mustererkennung, unter Verwendung eines oder mehrerer Schwellenwerte oder anderer an sich bekannte Methoden erreicht werden.

Aufgrund der festgelegten Position und/oder Ausrichtung sowie der bekannten Abbildungseigenschaften der Erfassungseinrichtung sind bei bekannter Höhe und/oder Ausrichtung des Rahmens oder Gestänges der Maschine bzw. der Erfassungseinrichtung relativ zur Nutzfläche die Abmessungen des erfassten Flächenbereichs bekannt. Das bedeutet, dass die identifizierten Unterbereiche realen Bereichen der erfassten Nutzfläche entsprechen.

Somit können einem Erfordernis zur Ansteuerung sowohl ein Punkt in dem Datensatz als auch ein Ort auf der Nutzfläche zugeordnet werden.

Der Zeitpunkt und/oder der Ort der Erfassung bildet einen Ausgangspunkt für eine nachfolgende Auswertung der erfassten Daten durch eine Auswerteeinrichtung. Dieser Ausgangspunkt wird der Auswerteeinrichtung gemeinsam mit dem Datensatz übergeben. Ausgehend von diesem Ausgangspunkt ermittelt die Auswerteeinrichtung einen zeitlichen und/oder räumlichen Abstand zu einem Punkt, an dem eine Ansteuerung des zumindest einen Behandlungsorgans durchzuführen ist.

Der Punkt, an dem eine Ansteuerung des zumindest einen Behandlungsorgans durchzuführen ist, kann mit dem Punkt, an dem eine Ansteuerung des zumindest einen Behandlungsorgans erforderlich ist, zusammenfallen. Es kann aber auch vorgesehen sein, dass der Punkt, an dem eine Ansteuerung des zumindest einen Behandlungsorgans durchzuführen ist, verschieden von dem Punkt ist, an dem eine Ansteuerung des zumindest einen Behandlungsorgans erforderlich ist. Dies ist beispielsweise vorteilhaft, um Trägheiten der Maschine auszugleichen und sicherzustellen, dass eine Ansteuerung einem geeigneten Punkt durchgeführt - also ausgelöst - wird, damit die Ansteuerung am Punkt des Erfordernisses tatsächlich erfolgt. Auf diese Weise kann die Präzision einer Behandlung erheblich gesteigert werden.

Alle definierten Punkte, also Ausgangspunkt sowie Punkte eines Ansteuerungserfordernisses oder der Durchführung einer Ansteuerung, werden mit einer internen Systemzeit der Erfassungseinrichtung, der Auswerteeinrichtung und/oder der Steuereinrichtung abgeglichen. Somit kann jedem Punkt in vorteilhafter Weise ein eindeutiger Zeitstempel zugeordnet werden. Dieser Zeitstempel ist mit der Systemzeit abgeglichen, die jeder signalverbundenen Einrichtung der Maschine, insbesondere der Erfassungseinrichtung, der Auswerteeinrichtung und der Steuerungseinrichtung zur Verfügung steht.

Zwischen Ausgangspunkt und Punkt eines Ansteuerungserfordernisses wird mittels der Auswerteeinrichtung ein Abstand ermittelt. Dieser kann zunächst innerhalb des zweidimensionalen Datensatzes ermittelt werden. Wenn beispielsweise der Datensatz als Bild vorliegt, kann dieser Abstand in Bildpunkten bemessen sein.

Durch die bekannten Abmessungen des erfassten Flächenbereichs und bei bekannter Vortriebgeschwindigkeit der Maschine werden mittels der Auswerteeinrichtung die räumlichen Abstände in zeitliche Abstände überführt. Dazu kann der ermittelte in Bildpunkten bemessene Abstand innerhalb des Datensatzes mit den realen Abmessungen des erfassten Flächenbereichs und der Vortriebsgeschwindigkeit in Bezug gesetzt werden. Somit kann nach Überwinden des zeitlichen Abstands an dem entsprechenden Ort der Nutzfläche eine Ansteuerung zumindest eines Behandlungsorgans durchgeführt werden.

Alternativ oder zusätzlich kann mittels der Auswerteeinrichtung durch die bekannten Abmessungen des erfassten Flächenbereichs ein räumlicher Abstand bestimmet werden, der bzgl. der Nutzfläche mittels eines Positionserfassungssystems der Maschine in Bezug gesetzt wird, um eine Ansteuerung an dem entsprechenden Ort der Nutzfläche durchzuführen.

Es kann vorgesehen sein, sowohl den zeitlichen als auch den räumlichen Abstand zu verwenden, um durch die Kombination die Bestimmungsgenauigkeit zu steigern.

Das Identifizieren von Unterbereichen des erfassten Flächenbereichs, in denen eine Ansteuerung zumindest eines Behandlungsorgans erforderlich ist, ist vorteilhaft, weil somit die Menge der zu verarbeitenden Daten vermindert wird.

Es ist vorgesehen, basierend auf der beschriebenen Auswertung Stellbefehle zu erzeugen, mittels derer Basis eine Steuereinrichtung die Ansteuerung zumindest eines Behandlungsorgans durchführt. Eine Erzeugung und Übermittlung von Stellbefehlen nur für identifizierte Unterbereiche bewirkt eine Ressourceneinsparung, da somit nur diejenigen Behandlungsorgane angesteuert werden, deren Ansteuerung tatsächlich erforderlich ist. Auswerteeinrichtung, Steuereinrichtung und das diese untereinander sowie die Behandlungsorgane signalverbindende Bus-System werden nicht unnötig belastet. Insbesondere ist die Bandbreite bekannter Bus-Systeme begrenzt, somit bleibt in vorteilhafter Weise ein größerer Anteil für andere, beispielsweise sicherheitsrelevante, Stellbefehle frei.

Bevorzugt wird ein zeitlicher und/oder räumlicher Abstand von einem Ausgangspunkt zu einem Punkt, an dem eine Ansteuerung des zumindest einen Behandlungsorgans durchzuführen ist, für jeden Unterbereich bestimmt.

Besonders bevorzugt wird ein zeitlicher und/oder räumlicher Abstand von einem Ausgangspunkt zu einem Punkt, an dem eine Ansteuerung des zumindest einen Behandlungsorgans durchzuführen ist, für jeden identifizierten Unterbereich durchgeführt.

Es kann vorteilhaft sein, wenn die Ansteuerung des zumindest einen Behandlungsorgans und/oder das Erfordernis einer Ansteuerung von dem momentanen Ansteuerungszustand des zumindest einen Behandlungsorgans abhängig ist. So kann vorgesehen sein, dass eine Ansteuerung nur dann erfolgt und/oder ein Erfordernis einer Ansteuerung nur dann erkannt wird, wenn der erforderliche Ziel-Ansteuerungszustand von dem momentanen Ist-Ansteuerungszustand verschieden ist.

Wird beispielsweise die Anwesenheit zu behandelnder Pflanzen erkannt und ist das entsprechende zumindest eine Behandlungsorgan deaktiviert (Ist-Ansteuerungszustand), wird ein Erfordernis erkannt und eine Ansteuerung durchgeführt, um das zumindest eine Behandlungsorgan zu aktivieren (Ziel-Ansteuerungszustand). In analoger Weise verhält es sich mit anderen, zuvor beschriebenen Ansteuerungszuständen.

Wird beispielsweise die Anwesenheit zu behandelnder Pflanzen erkannt und ist das entsprechende zumindest eine Behandlungsorgan aktiviert (Ist-Ansteuerungszustand), wird ein Erfordernis nicht erkannt und eine Ansteuerung nicht durchgeführt, da der Ziel-Ansteuerungszustand bereits dem Ist-Ansteuerungszustand entspricht. In analoger Weise verhält es sich mit anderen, zuvor beschriebenen Ansteuerungszuständen.

In vorteilhafter Weise führt dieses Vorgehen zu einer weiteren Reduzierung der zu verarbeitenden Datenmenge.

Die Unterbereiche sind lateral zu der Vortriebsrichtung angeordnet und/oder einem oder mehreren Behandlungsorganen zugeordnet. Somit wird in einfacher Weise erreicht, dass basierend auf den identifizierten Unterbereichen die beschriebene Bestimmung des zeitlichen und/oder räumlichen Abstands für die entsprechenden, den identifizierten Unterbereichen zugeordneten Behandlungsorgane erfolgt. Eine Ansteuerung dieser Behandlungsorgane kann dann zielgerichtet erfolgen.

Die Unterbereiche überdecken den erfassten Flächenbereich vollflächig. Die Unterbereiche weisen zumindest in lateraler Richtung gleiche Abmessungen auf.

Vorzugsweise entspricht die Anzahl und/oder die laterale Abmessung der Unterbereiche, in welche der erfasste Flächenbereich der Nutzfläche mittels der Auswerteeinrichtung unterteilt wird, einem Arbeitsbereich und/oder einer Arbeitsbreite eines Behandlungsorgans bzgl. der Nutzfläche. Somit wird in vorteilhafter Weise eine eindeutige Zuordnung zwischen den Behandlungsorganen, deren Arbeitsbereichen und/oder Arbeitsbreiten und den Unterbereichen hergestellt. Dadurch kann eine sehr präzise Pflanzenbehandlung erreicht werden.

Besonders bevorzugt, ist die Auswerteeinrichtung eingerichtet, die - insbesondere lateralen - Abmessungen der Unterbereiche an die Arbeitsbereiche und/oder Arbeitsbreiten der verwendeten Behandlungsorgane anzupassen. Damit kann eine Anpassung an wechselnde Eigenschaften von Behandlungsorganen in einfacher Weise erreicht werden. Wechselnde Eigenschaften von Behandlungsorganen liegen beispielsweise vor, wenn die Behandlungsorgane als Mehrfachdüsen ausgeführt sind, deren Düsen unterschiedliche Eigenschaften aufweisen und in an sich bekannter Weise ein Wechsel der angesteuerten Düse erfolgt.

Es ist weiterhin vorteilhaft, dass die zumindest eine Erfassungseinrichtung als optische Erfassungseinrichtung, insbesondere als Kamera, ausgebildet ist und bevorzugt im infraroten, sichtbaren oder ultravioletten Spektralbereich arbeitet. Eine derartig ausgebildete Erfassungseinrichtung ist kostengünstig und erlaubt eine besonders einfache Anwendung des beschriebenen Vorgehens.

Insbesondere können im infraroten, sichtbaren oder ultravioletten Spektralbereich die Eigenschaften des erfassten Flächenbereichs der Nutzfläche in einfacher und zuverlässiger Weise ausgewertet werden. In an sich bekannter Weise in diesen Spektralbereichen mittels der zuvor beschriebenen Vorgehensweisen die Anwesenheit und/oder die Position weitere relevante Parameter die zu behandelnden Pflanzen betreffend abgeleitet werden.

In bevorzugter Weise liegt der von der zumindest einen Erfassungseinrichtung erzeugte Datensatz als zweidimensionales Bild vor.

Die Erfassung des vor den Behandlungsorganen befindlichen Flächenbereichs und/oder die Erzeugung des Datensatzes kann vorzugsweise periodisch erfolgen. In vorteilhafter Weise wird so die Erfassung der Nutzfläche entlang des gesamten Fahrweges der landwirtschaftlichen Maschine ermöglicht. Die neuerliche Erfassung und/oder Datensatzerzeugung erfolgt immer dann, wenn die landwirtschaftliche Maschine eine Strecke zurückgelegt hat, die in Vortriebsrichtung den Abmessungen des zuvor erfassten Flächenbereichs entspricht. Somit wird eine flächendeckende Erfassung der Nutzfläche sichergestellt.

Bevorzugt ist die Frequenz der Erfassung und/oder Datensatzerzeugung an die Vortriebsgeschwindigkeit der Maschine gekoppelt. Bei höherer Geschwindigkeit beispielsweise wird eine den Abmessungen des erfassten Flächenbereichs entsprechende Strecke in kürzerer Zeit zurückgelegt. Die Erfassung erfolgt mit höherer Frequenz. Auf diese Weise wird eine exakte, lückenlose Erfassung der Nutzfläche sichergestellt.

Bei bekannten Abbildungseigenschaften der zumindest einen Erfassungseinrichtung hängen die Abmessungen des erfassten Flächenbereichs von der Position und/oder Ausrichtung der Erfassungseinrichtung relativ zur Nutzfläche ab. Ändert sich beispielsweise über eine Veränderung der Ausrichtung des die Erfassungseinrichtung tragenden Rahmens oder Gestänges die Position und/oder Ausrichtung der Erfassungseinrichtung relativ der Nutzfläche, muss dies von der Auswerteinrichtung bei dem zuvor beschriebenen Vorgehen berücksichtigt werden. Insbesondere ist dann eine erneute Erfassung durchzuführen. Auf diese Weise ist sichergestellt, dass die bestimmten zeitlichen und/oder räumlichen Abstände stets eine korrekte Entsprechung in der realen Nutzfläche haben. Auf diese Weise wird die Ansteuerung des zumindest einen Behandlungsorgans stets am richtigen Ort der Nutzfläche umgesetzt.

In vorteilhafter Weise bezeichnet der Ausgangspunkt den Zeitpunkt oder den Ort, an dem der vor den Behandlungsorganen befindliche Flächenbereich erfasst wird. Dies ermöglicht eine Umsetzung des zuvor beschriebenen Vorgehens in einfacher Weise. Insbesondere können die zeitlichen und/oder räumlichen Abstände in zuverlässiger und präziser Weise ermittelt werden.

Es ist vorteilhaft, dass die Auswerteeinrichtung konfiguriert ist, den von der Erfassungseinrichtung erfassten Flächenbereich in Intervalle zu unterteilen, wobei die Intervalle in Vortriebsrichtung angeordnet sind.

Die Intervalle überdecken bevorzugt den erfassten Flächenbereich vollflächig. Besonders bevorzugt weisen die Intervalle zumindest in Vortriebsrichtung gleiche Abmessungen auf. Auf diese Weise wird der erfasste Flächenbereich in Fahrtrichtung gleichmäßig aufgeteilt. Den in Vortriebsrichtung gelegenen Grenzen der Intervalle können Punkte sowohl im Datensatz als auch Orte auf der Nutzfläche zugeordnet werden.

Die Grenzen der Intervalle werden bevorzugt mit der internen Systemzeit der Erfassungseinrichtung, der Auswerteeinrichtung und/oder der Steuereinrichtung abgeglichen. Somit wird jeder Grenze in vorteilhafter Weise ein eindeutiger Zeitstempel zugeordnet. Dieser Zeitstempel ist mit der Systemzeit abgeglichen, die jeder signalverbundenen Einrichtung der Maschine, insbesondere der Erfassungseinrichtung, der Auswerteeinrichtung und der Steuerungseinrichtung zur Verfügung steht.

Es ist von Vorteil, dass der von der Erfassungseinrichtung erfasste Flächenbereich mittels lateral zur Vortriebsrichtung angeordneter Unterbereiche und mittels in Vortriebsrichtung angeordneter Intervalle ganzflächig in ein Raster gleichmäßiger Rasterfelder unterteilt ist, wobei die Rasterfelder lateral zur Vortriebsrichtung durch die Grenzen der Unterbereiche begrenzt sind und in Vortriebsrichtung durch die Grenzen der Intervalle.

Es ist überdies vorteilhaft, dass die Auswerteeinrichtung konfiguriert ist, zumindest ein Rasterfeld zu identifizieren, in dem eine Ansteuerung zumindest eines Behandlungsorgans erforderlich ist, und ausgehend von einem Ausgangspunkt einen zeitlichen und/oder räumlichen Abstand zu den in Vortriebsrichtung gelegenen Grenzen des zumindest einen Rasterfeld zu bestimmen.

Die Rasterfelder mit gleicher lateraler Lage werden dem oder den dieser lateralen Lage entsprechenden Behandlungsorganen zugeordnet - in analoger Weise zu den Unterbereichen. Insbesondere sind Rasterfelder gleicher lateraler Lage Teilbereiche eines Unterbereichs; alle Rasterfelder gleicher lateraler Lage bilden jeweils einen Unterbereich.

Die Rasterfelder sind analog zu den Unterbereichen einem oder mehreren Behandlungsorganen zugeordnet. Insbesondere sind Rasterfelder gleicher lateraler Lage demselben Behandlungsorgan zugeordnet.

Auf diese Weise kann die Menge an zu verarbeitenden Daten weiter reduziert werden und die Auswertung des erfassten Flächenbereichs vereinheitlicht werden. In vorteilhafter Weise werden alle Rasterfelder des erfassten Flächenbereichs in einheitlicher Weise ausgewertet. Das Erfordernis einer Ansteuerung zumindest eines Behandlungsorgans bestimmt sich analog zu der zuvor beschriebenen Weise. Im Folgenden müssen jedoch nur die Daten weiterverarbeitet werden, die identifizierte Rasterfelder betreffen.

Zusätzlich sind die in Vortriebsrichtung gelegenen Grenzen der Rasterfelder der Auswerteeinrichtung bereits bekannt. Es muss also kein zeitlicher und/oder räumlicher Abstand zu einem Erfordernis einer Ansteuerung zumindest eines Behandlungsorgans bestimmt werden. Es wird in deutlich vereinfachter Weise lediglich festgestellt, in welchem Rasterfeld/welchen Rasterfeldern ein solches Erfordernis erfüllt ist. Der zeitliche und/oder räumliche Abstand zu dessen/deren Grenzen bzw. zu den Zeitstempeln der Grenzen ist dann in einfacher Weise bestimmbar.

Der Punkt, an dem eine Ansteuerung des zumindest einen Behandlungsorgans durchzuführen ist, liegt dann auf einer in Vortriebsrichtung gelegenen Grenze eines solchen identifizierten Rasterfelds. Somit wird in vorteilhafter Weise sichergestellt, dass eine bedarfsgerechte Pflanzenbehandlung für das identifizierte Rasterfeld erfolgt.

Durch die zuvor beschriebene Abhängigkeit der Ansteuerung des zumindest einen Behandlungsorgans von dem momentanen Ansteuerungszustand des zumindest einen Behandlungsorgans kann in vorteilhafter Weise eine weitere Vereinfachung und Reduzierung der Menge der zu verarbeitenden Daten erreicht werden.

Beispielsweise wird die Ausbringung an der in Vortriebsrichtung gesehen ersten Grenze des identifizierten Rasterfelds aktiviert. Wird beispielsweise für mehrere Rasterfelder gleicher lateraler Lage aus dem erfassten Flächenbereich die Anwesenheit zu behandelnder Pflanzen abgeleitet, kann die Anwesenheit der zu behandelnden Pflanzen die in Vortriebsrichtung gesehen zweite Grenze des Rasterfelds überschreiten. In diesem Fall wird die Ausbringung an dieser zweiten Grenze nicht deaktiviert, da auch im folgenden Rasterfeld die Anwesenheit erkannt ist. Eine Ansteuerung - also ein Deaktivieren der aktivierten Ausbringung - erfolgt erst, wenn innerhalb eines Rasterfelds ein Wechsel von der Anwesenheit zu behandelnder Pflanzen zu einer Abwesenheit zu behandelnder Pflanzen abgeleitet wird.

In einem solchen Fall fällt der Punkt, an dem eine Ansteuerung eines Behandlungsorgans durchgeführt wird auf die in Vortriebsrichtung gesehen erste Grenze eines identifizierten Rasterfelds. Die Behandlung wird aktiviert. Ein weiterer Punkt, an dem die Ansteuerung des Behandlungsorgans durchgeführt wird fällt auf die in Vortriebsrichtung gesehen zweite Grenze eines identifizierten Rasterfelds gleicher lateraler Lage. Die Behandlung wird deaktiviert. Dabei müssen die beiden betreffenden Rasterfelder nicht aneinander grenzen. Erstreckt sich die Anwesenheit zu behandelnder Pflanzen über mehrere aneinandergrenzende Rasterfelder gleicher lateraler Lage, wird der momentane Ansteuerungszustand an den Grenzen aneinander grenzender Rasterfelder beibehalten.

Somit ist es lediglich notwendig, die zeitlichen und/oder räumlichen Abstände und/oder Zeitstempel der betreffenden Grenzen der Rasterfelder zu verarbeiten und auf diesen basierende Stellbefehle an eine Steuereinrichtung zu übermitteln, an denen eine Ansteuerung tatsächlich durchgeführt wird.

Alternativ oder zusätzlich kann jedem Rasterfeld eine eindeutige Kennung zugeordnet sein. In vorteilhafter Weise kann dann eine Verarbeitung der Daten basierend auf dieser eindeutigen Kennung der Rasterfelder erfolgen. Wird in der zuvor beschriebenen Weise ein Rasterfeld identifiziert, in dem eine Ansteuerung zumindest eines Behandlungsorgans erforderlich ist, können die Grenzen dieses Rasterfelds anhand dessen eindeutiger Kennung identifiziert werden. Eine Ansteuerung des zumindest einen Behandlungsorgans erfolgt analog zu der zuvor beschriebenen Weise.

In besonders einfacher Weise muss aber lediglich die Kennung eines identifizierten Rasterfelds verarbeitet werden, auf deren Basis durch die Steuereinrichtung eine Ansteuerung des zumindest einen Behandlungsorgans durchgeführt wird.

In besonders vorteilhafter Weise kann über die Kennung ein Steuerdatensatz erzeugt werden, der in immer gleicher Weise erzeugt und weiter verarbeitet wird. Jedem Rasterfeld wird dabei zugeordnet, ob ein Erfordernis einer Ansteuerung des dem Rasterfelds zugeordneten Behandlungsorgans erforderlich ist. Eine solche Zuordnung kann beispielsweise in Form von Schaltzuständen "0" oder "1" erfolgen.

In der zuvor beschriebenen Weise kann die Auswerteeinrichtung und/oder die Steuereinrichtung dann feststellen, an den Grenzen welcher Rasterfelder eine Ansteuerung durchzuführen ist. Die Bestimmung der zeitlichen und/oder räumlichen Abstände erfolgt dann ebenfalls in der zuvor beschriebenen Weise.

Auf diese Weise kann ein sehr ressourcenschonender Steuerdatensatz aus einem sehr datenintensiven Datensatz der Erfassungseinrichtung erzeugt werden.

Ein solcher Steuerdatensatz wird für jeden von der Erfassungseinrichtung erzeugten Datensatz erzeugt. Der Steuerdatensatz kann in Form einer Matrix oder einer Zeichenkette vorliegen. Die Kennung eines Rasterfelds ist im Falle einer Matrix in der Position innerhalb der Matrix codiert. Die Kennung eines Rasterfelds ist im Falle einer Zeichenkette in der Stelle innerhalb der Zeichenkette codiert.

Durch die zuvor beschriebene Durchführung der Behandlung zwischen der in Vortriebsrichtung gelegenen ersten Grenze eines ersten Rasterelementes, für das das Erfordernis einer Ansteuerung erkannt wird, und der in Vortriebsrichtung gesehenen zweiten Grenze eines zweiten Rasterelementes, für das das Erfordernis einer Ansteuerung erkannt wird, wird eine Fläche behandelt, die etwas größer als die Ausdehnung der zu behandelnden Pflanzen ist. Während dabei der Datenverarbeitungsaufwand minimal ist, ist die vollständige Behandlung der zu behandelnden Pflanzen sichergestellt. Dadurch wird eine besonders zuverlässige Behandlung bereitgestellt.

In vorteilhafter Weise ist vorgesehen, dass die Steuereinrichtung konfiguriert ist, ausgehend von dem Ausgangspunkt zumindest ein Behandlungsorgan basierend auf zumindest einem der folgenden Parameter anzusteuern:
- zeitlicher und/oder räumlicher Abstand zu dem Punkt, an dem eine Ansteuerung des zumindest einen Behandlungsorgans durchzuführen ist;
- zeitlicher und/oder räumlicher Abstand zu den in Vortriebsrichtung gelegenen Grenzen zumindest eines Rasterfeldes, in dem eine Ansteuerung zumindest eines Behandlungsorgans erforderlich ist.

Der Steuerungseinrichtung wird auf diese Weise in eindeutiges Kriterium zur für die Ansteuerung des zumindest einen Behandlungsorgans zur Verfügung gestellt. Dieses Kriterium kann entsprechend des zuvor beschriebenen Vorgehens durch zumindest einen der folgenden Parameter gegeben sein:
- Wartezeiten und/oder Wartestrecken bis zur Durchführung der Ansteuerung sein,
- absolute Zeitpunkte und/oder Zeitstempel und/oder Orte einer Durchführung der Ansteuerung
- festgelegte Punkte innerhalb des erfassten Datensatzes.

Die Steuereinrichtung generiert basierend auf den von der Auswerteeinrichtung übermittelten Daten Stellbefehle für geeignete Stelleinrichtungen zur Ansteuerung der Behandlungsorgane.

Auf diese vorgeschlagene Weise werden große Datensätze, die die Eigenschaften des vor den Behandlungsorganen befindlichen Flächenbereichs umfassen, in strukturierter, ressourcenschonender Weise ausgewertet und Stellbefehle für eine Steuerungseinrichtung zur Ansteuerung von Behandlungsorganen erzeugt.

Es ist wesentlich, dass die Auswerteeinrichtung die Abbildungseigenschaften der zumindest einen Erfassungseinrichtung sowie die Position und/oder die Ausrichtung der zumindest einen Erfassungseinrichtung relativ zur Nutzfläche sowie die momentane Vortriebsgeschwindigkeit der Maschine berücksichtigt. Sämtliche dieser Parameter haben Einfluss auf die Bestimmung der Abmessungen des erfassten Flächenbereichs sowie die Bestimmung der Abmessungen der Unterbereiche, Intervalle und/oder Rasterfelder.

Daher ist es besonders vorteilhaft, dass die Auswerteeinrichtung konfiguriert ist, eine Kalibrierung durchzuführen, um Betriebsparameter der Auswerteeinrichtung und/oder der Steuereinrichtung zu verändern, wobei die Kalibrierung ausgelöst wird, wenn sich zumindest einer der folgenden Parameter über ein festgelegtes Maß hinaus ändert:
- relative Position und/oder Ausrichtung der Behandlungsorgane relativ zum vor den Behandlungsorganen befindlichen Flächenbereichs;
- relative Position und/oder Ausrichtung der zumindest einen Erfassungseinrichtung relativ zum vor den Behandlungsorganen befindlichen Flächenbereichs;
- Eigenschaften der verwendeten Behandlungsorgane;
- Vortriebsgeschwindigkeit und/oder Bewegungsrichtung der Behandlungsorgane und/oder der zumindest einen Erfassungseinrichtung;
- Drehraten und/oder Bahngeschwindigkeiten der Behandlungsorgane und/oder der zumindest einen Erfassungseinrichtung.

Durch eine derartige Kalibrierung kann unter Berücksichtigung der Abbildungseigenschaften der zumindest einen Erfassungseinrichtung ein Bezug zwischen den Abmessungen des erfassten Flächenbereichs und den Abmessungen des Datensatzes, der Unterbereiche, der Intervalle und/oder der Rasterfelder hergestellt werden. Somit ist sichergestellt, dass die Nutzfläche stets exakt und lückenlos erfasst wird. Überdies ist sichergestellt, dass die bestimmten zeitlichen und/oder räumlichen Abstände stets eine korrekte Entsprechung in der realen Nutzfläche haben. Auf diese Weise wird die Ansteuerung des zumindest einen Behandlungsorgans stets am richtigen Ort der Nutzfläche umgesetzt.

Es ist vorteilhaft, dass bei jeder Änderung eines der zuvor beschriebenen Parameter über ein festgelegtes Maß hinaus und/oder nach jeder durchgeführten Kalibrierung eine erneute Erfassung durchgeführt und ein neuer Datensatz erzeugt wird. Somit wird erreicht, dass der Auswertung stets die korrekten Parameter zugrunde liegen.

Das festgelegte Maß, bis zu welchem eine Änderung der Parameter akzeptiert wird, ist dabei so gewählt, dass eine möglichst schnelle Anpassung erreicht wird und gleichzeitig eine zwischen den Kalibrierungen eine konstante Arbeitsweise gewährleistet ist, damit nicht die Kalibrierung die Vorteile der ressourcensparenden Auswertung zunichte macht.

Änderungen der benannten Parameter können während eines Einsatzes der landwirtschaftlichen Maschine jederzeit auftreten. Beispielsweise tritt eine Veränderung der Position und/oder Ausrichtung des die Erfassungseinrichtung und/oder die Behandlungsorgane tragenden Rahmens und/oder Gestänges relativ der Nutzfläche auf. Dies kann beispielsweise durch eine vorgesehene Anpassung der Ausrichtung und/oder Position des Rahmens oder Gestänges an die Kontur der Nutzfläche zur Verbesserung der Behandlungsqualität verursacht sein. Auch eine Veränderung der Eigenschaften der Behandlungsorgane kann ursächlich sein, da für verschiedene Behandlungserfordernisse verschiedene Behandlungsorgane verfügbar sein können. Beispielsweise können als Düsen ausgebildete Behandlungsorgane für verschiedene Ausbringsituationen verschiedene Ausbringeigenschaften aufweisen.

Vortriebsrichtung und Vortriebsgeschwindigkeit der Maschine können sich ebenfalls ändern. Wendemanöver oder Krummlinie Spurführungen können hier ursächlich sein. Weist der Rahmen oder das Gestänge der Maschine eine, insbesondere große, laterale Ausdehnung auf, erreichen die in lateraler Richtung angeordneten Behandlungsorgane verschiedene Bahngeschwindigkeiten. Für eine besonders exakte Behandlung ist eine solche Relativbewegung bei dem zuvor beschriebenen Vorgehen zu berücksichtigen. Insbesondere können sich dann die in Fahrtrichtung gelegenen Grenzen korrespondierender Intervalle in lateraler Richtung unterscheiden.

Alternativ oder zusätzlich kann ein in lateral ausgedehnter/s Rahmen oder Gestänge durch den Vortrieb auf einer unebenen Nutzfläche zu Schwingungen angeregt werden. Diese führen zu einer Relativbewegung der Erfassungseinrichtung und/oder Behandlungsorgane zu bezüglich der landwirtschaftlichen Maschine. Für eine besonders exakte Behandlung ist eine solche Relativbewegung bei dem zuvor beschriebenen Vorgehen zu berücksichtigen.

Es ist also von besonderem Vorteil, wenn derartige die Abmessungen der Unterbereiche, der Intervalle und/oder der Rasterfelder beeinflussende Parameter berücksichtig werden und der Auswerteeinheit zu jeder Zeit bekannt sind. So ist jederzeit eine exakte Bestimmung der zeitlichen und/oder räumlichen Abstände sicher gestellt. Eine besonders präzise und zuverlässige Behandlung der zu behandelnden Pflanzen kann erfolgen.

Die Erfindung erstreckt sich zudem auf ein Verfahren nach Patentanspruch 9. Vorteilhafte Ausführungen werden in den Unteransprüchen beschrieben. Zu den Vorteilen des Verfahrens wird auf die bisherigen Ausführungen verwiesen.

Weitere Einzelheiten der Erfindung sind der Beispielsbeschreibung und den Zeichnungen zu entnehmen. Die Zeichnungen zeigen
- Fig.1: eine als Feldspritze ausgeführte landwirtschaftliche Maschine in rückwärtiger Ansicht,
- Fig.2: einen in Unterbereiche unterteilten erfassten Flächenbereich,
- Fig.3: einen in Rasterfelder unterteilten erfassten Flächenbereich.

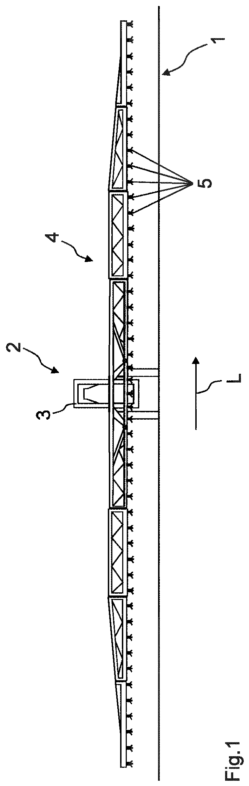

Zur bedarfsgerechten Behandlung von Pflanzen auf einer landwirtschaftlichen Nutzfläche 1 können verschiedene landwirtschaftliche Maschinen 2 vorgesehen sein. Im Ausführungsbeispiel der Fig.1 ist eine als Feldspritze ausgeführte Ausbringmaschine gezeigt.

Die vorliegende Erfindung ist nicht auf eine solche Ausbringmaschine beschränkt; in analoger Weise ist die Erfindung auch mit Maschinen zur mechanischen oder thermischen Pflanzenbehandlung und/oder andere Arten von Ausbringmaschinen anwendbar.

Die in Fig.1 gezeigte Ausbringmaschine 2 umfasst einen Rahmen 3 an dem ein Gestänge 4 befestigt ist. Das Gestänge 4 ist gegenüber dem Rahmen 3 und/oder der Nutzfläche 1 neigungs- und/oder höhenverstellbar. Das Gestänge 4 umfasst eine Vielzahl an Behandlungsorganen 5. Die Behandlungsorgane 5 sind im vorliegenden Beispiel der Fig.1 als Düsen ausgeführt. Die Behandlungsorgane 5 sind gleichmäßig beabstandet in lateraler Richtung L an dem Gestänge 4 angeordnet.

Die Ausbringmaschine 2 bewegt sich während eines Ausbringvorgangs mit einer Vortriebsgeschwindigkeit in einer Vortriebsrichtung V über die Nutzfläche 1. In Fig.1 entspricht die Vortriebsrichtung V der Blickrichtung in die Zeichenebene hinein.

Die landwirtschaftliche Maschine 2 umfasst zumindest eine nicht dargestellte Erfassungseinrichtung. Die Erfassungseinrichtung ist am Rahmen 3 oder am Gestänge 4 der landwirtschaftlichen Maschine an bekannter Position und mit bekannter Ausrichtung relativ zum Rahmen 3 und/oder Gestänge 4 angeordnet. Die Erfassungseinrichtung ist konfiguriert, einen in Vortriebsrichtung V vor den Behandlungsorganen 5 befindlichen Flächenbereich 6 zu erfassen. Die Erfassung des vor den Behandlungsorganen 5 befindlichen Flächenbereichs 6 erfolgt in Form eines zweidimensionalen Datensatzes 7. Die Erfassung erfolgt zu/an einem als Ausgangspunkt P bezeichneten Zeitpunkt und/oder Ort.

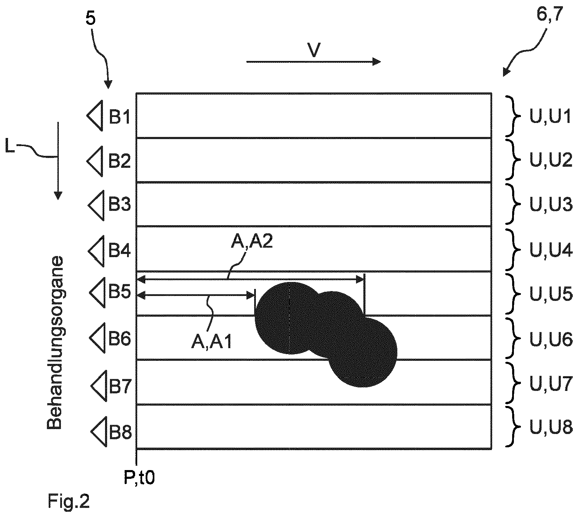

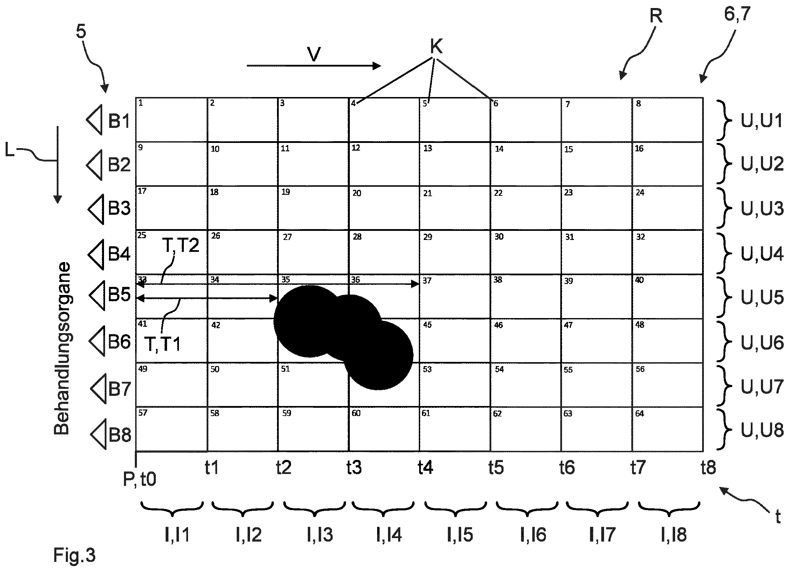

Im vorliegenden Ausführungsbeispiel ist die Erfassungseinrichtung als Kamera ausgebildet und arbeitet im infraroten, sichtbaren und/oder ultravioletten Spektralbereich. Der zweidimensionale Datensatz 7 liegt als Bild des vor den Behandlungsorganen 5 befindlichen, erfassten Flächenbereichs 6 vor. Ein solcher als Bild vorliegender Datensatz 7 ist in Fig.2 und Fig.3 gezeigt.

Aufgrund bekannter Abbildungseigenschaften der Erfassungseinrichtung, bekannter Position und/oder Ausrichtung der Erfassungseinrichtung relativ zu der Nutzfläche 1 und bekannter Vortriebsgeschwindigkeit der Maschine 2, sind die Abmessungen des erfassten Flächenbereichs 6 bekannt. Die Abmessungen des Datensatzes 7 und des erfassten Flächenbereichs 6 sind rechnerisch ineinander überführbar.

Die landwirtschaftliche Maschine 2 umfasst zusätzlich eine nicht dargestellte Auswerteeinrichtung. Die Auswerteeinrichtung ist konfiguriert, den erfassten Flächenbereich 6 der Nutzfläche 1 bzw. den zweidimensionalen Datensatz 7 in Unterbereiche U zu unterteilen. In Fig.2 sind acht U1,...,U8, solcher Unterbereiche U dargestellt. Eine beliebige andere Anzahl solcher Unterbereiche U ist möglich.

Fig.2 zeigt, dass die Unterbereiche U in lateraler Richtung L angeordnet sind und den erfassten Flächenbereich 6 bzw. den zweidimensionalen Datensatz 7 vollflächig überdecken. Im vorliegenden Ausführungsbeispiel ist jeder der Unterbereiche U einem Behandlungsorgan 5 zugeordnet, sodass eine eindeutige Zuordnung der Unterbereiche U,U1,...,U8 zu den Behandlungsorganen 5,B1,...,B8 besteht.

Die Auswerteeinrichtung ist konfiguriert, den Datensatz 7 hinsichtlich der Eigenschaften des erfassten Flächenbereichs 6 auszuwerten. Es ist vorgesehen, aus diesen Eigenschaften, mittels der Auswerteeinrichtung die Anwesenheit zu behandelnder Pflanzen 8 abzuleiten. Aus der Anwesenheit zu behandelnder Pflanzen 8 ergibt sich ein Erfordernis zur Ansteuerung zumindest eines Behandlungsorgans 5. Einem solchen Erfordernis wird ein Punkt in dem Datensatz 7 zugeordnet. Ein solcher Punkt kann einem Bildpunkt entsprechen. Ein solcher Punkt hat eine reale Entsprechung in der Nutzfläche 1.

Mittels der Auswerteeinrichtung wird ferner zumindest ein Unterbereich U identifiziert, in dem sich ein solches Erfordernis einer Ansteuerung ergibt. Im Beispiel der Fig.2 sind dies die Unterbereiche U5, U6 und U7, wobei sich die folgenden Erläuterungen beispielhaft aber nicht beschränkend auf den Unterbereich U5 beziehen.

Dem Ausgangspunkt P, der dem Zeitpunkt und/oder dem Ort der Erfassung des Flächenbereichs 6 entspricht, wird durch die Erfassungseinrichtung und/oder die Auswerteeinrichtung ein Zeitstempel t0 zugeordnet. Dieser Zeitstempel t0 ist mit einer Systemzeit abgeglichen, die jeder signalverbundenen Einrichtung der Maschine 2, insbesondere der Erfassungseinrichtung, der Auswerteeinrichtung und der Steuerungseinrichtung zur Verfügung steht.

Ausgehend von dem Ausgangspunkt P bzw. dessen Zeitstempel t0 wird ein Abstand A zu dem Erfordernis der Ansteuerung des zumindest einen Behandlungsorgans 5 bzw. zu dem diesen Erfordernis zugeordneten Punkt im Datensatz bestimmt.

Der Abstand A kann ein zeitlicher und/oder räumlicher Abstand sein. Als räumlicher Abstand kann er beispielsweise in Bildpunkten bemessen sein. Mittels der beschriebenen gegenseitigen Überführbarkeit der Abmessungen des Datensatzes 7 und des erfassten Flächenbereichs 6 lassen sich auch mittels der Auswerteeinrichtung innerhalb des Datensatzes 7 ermittelte Abstände in Abstände in der Nutzfläche 1 umrechnen.

Durch Berücksichtigung der momentanen Vortriebsgeschwindigkeit der Maschine 2 lassen sich alternativ oder zusätzlich zeitliche Abstände definieren.

Im Unterbereich U5 des Beispiels der Fig.2 wird beispielsweise ausgehend von dem Ausgangspunkt P bzw. dessen Zeitstempel t0 ein erster Abstand A1 zu einem Erfordernis der Ansteuerung des Behandlungsorgans B5, das sich aus der abgeleiteten Anwesenheit zu behandelnder Pflanzen 8 im Unterbereich U5 ergibt. Zudem wird analog ein zweiter Abstand A2 zu einem Erfordernis der Ansteuerung des Behandlungsorgans B5 bestimmt, das sich aus einer abgeleiteten Abwesenheit zu behandelnder Pflanzen 8 ergibt.

Ausgehend von dem Ausgangspunkt P ist in diesem Beispiel die Behandlung der zu behandelnden Pflanzen 8 mittels Behandlungsorgan B5 im Abstand A1 zu aktivieren und im Abstand A2 zu deaktivieren.

Die Ansteuerung der Behandlungsorgane 5 wird mittels einer nicht dargestellten Steuerungseinrichtung durchgeführt. Dazu kann der Abstand A als zeitlicher Abstand vorliegen. In diesem Fall wird Ansteuerung unter Berücksichtigung der momentanen Vortriebsgeschwindigkeit nach Ablauf dieses zeitlichen Abstands durchgeführt.

Der Abstand A kann als räumlicher Abstand vorliegen. In diesem Fall wird die Ansteuerung unter Berücksichtigung der Position der Maschine 2 auf der Nutzfläche 1 nach Überbrückung des räumlichen Abstands durchgeführt. Für diesen Fall verfügt die Maschine 2 über ein nicht dargestellte Positionserfassungssystem.

Fig.3 zeigt einen erfassten Flächenbereich 6 bzw. einen zweidimensionalen Datensatz 7, der von einer entsprechend konfigurierten Auswerteeinrichtung sowohl in Unterbereiche U als auch in Intervalle I unterteilt ist. Die Intervalle I sind in Vortriebsrichtung V angeordnet und überdecken den erfassten Flächenbereich 6 bzw. den zweidimensionalen Datensatz 7 vollflächig.

Unterbereiche U und Intervalle I bilden eine Vielzahl an Rasterfeldern R deren Grenzen in lateraler Richtung L durch die Grenzen der Unterbereiche U gegeben sind und deren Grenzen in Vortriebsrichtung V durch die Grenzen der Intervalle I gegeben sind. Jedem Rasterfeld R kann eine eindeutige Kennung K zugeordnet sein.

Im vorliegenden Ausführungsbeispiel der Fig.3 bilden acht Unterbereiche U mit acht Intervallen I beispielhaft und nicht beschränkend 64 gleichförmige Rasterfelder R. Jedes der Rasterfelder R ist einem Behandlungsorgan 5 zugeordnet, sodass eine eindeutige Zuordnung der Rasterfelder R1,...,R64 zu den Behandlungsorganen 5,B1,...,B8 besteht.

Den in Vortriebsrichtung V gelegenen Grenzen der Rasterfelder R können Punkte im Datensatz 7 zugeordnet werden.

Den in Vortriebsrichtung V gelegenen Grenzen der Rasterfelder R Zeitpunkte bzw. den diesen Grenzen entsprechenden Punkten im Datensatz 7 werden analog zum Ausgangspunkt P Zeitstempel t,t0,...,t8 zugeordnet. Der Ausgangspunkt P fällt dabei mit dem ersten Zeitstempel t0 zusammen.

In der bereits für Fig.2 beschriebenen Weise wird aus den Eigenschaften des erfassten Flächenbereichs 6 die Anwesenheit zu behandelnder Pflanzen 8 abgeleitet. Aus der Anwesenheit zu behandelnder Pflanzen 8 ergibt sich ein Erfordernis zur Ansteuerung zumindest eines Behandlungsorgans 5.

Mittels der Auswerteeinrichtung wird ferner zumindest ein Rasterfeld R identifiziert, in dem sich ein solches Erfordernis einer Ansteuerung ergibt. Im Beispiel der Fig.3 sind dies die Rasterfelder R35 bis R38, R43 bis R46 und/oder R53 bis R54, wobei sich die folgenden Erläuterungen beispielhaft aber nicht beschränkend auf die Rasterfelder R35 bis R38 beziehen.

Ausgehend von dem Ausgangspunkt P bzw. dessen Zeitstempel t0 wird ein Abstand T zu den in Vortriebsrichtung V gelegenen Grenzen bzw. deren Zeitstempel t der zuvor identifizierten Rasterfelder bestimmt. Der Abstand T kann analog zum Abstand A zeitlich und/oder räumlich sein. Abstand T besitzt die gleichen Eigenschaften wie Abstand A, wird aber nicht zu einem beliebigen Punkt definiert sondern lediglich zwischen dem Ausgangspunkt P bzw. dessen Zeitstempel t0 und einer in Vortriebsrichtung V gelegenen Grenze bzw. deren Zeitstempel t eines Rasterfelds R.

Ausgehend von dem Ausgangspunkt P ist im Beispiel der Fig.3 die Behandlung der zu behandelnden Pflanzen 8 mittels Behandlungsorgan B5 im Abstand T1 zu aktivieren und im Abstand T2 zu deaktivieren. Somit wird im Zuge der Diskretisierung der erfassten Flächenbereichs 6 bzw. des Datensatzes 7 eine Fläche behandelt, die etwas größer als die Ausdehnung der zu behandelnden Pflanzen 8 ist.

Die Ansteuerung der Behandlungsorgane 5 wird mittels einer nicht dargestellten Steuerungseinrichtung analog zur bereits zu Fig.2 beschriebenen Weise durchgeführt.

Eine Ansteuerung ist auch auf Basis der den Grenzen der Rasterfelder R zugeordneten Zeitstempel t durchführbar. Diese haben einen direkten Bezug zur Systemzeit, welche wiederum der Erfassungseinrichtung, der Auswerteeinrichtung und der Steuerungseinrichtung gleichermaßen bekannt ist. Es wird somit der Steuerungseinrichtung lediglich übermittelt, zu welchem Zeitstempel t eine Ansteuerung welches Behandlungsorgans 5 durchzuführen ist.

Eine Ansteuerung ist auch auf Basis der Kennung K des identifizierten Rasterfeldes R durchführbar. Es wird somit der Steuerungseinrichtung lediglich übermittelt, welche Rasterfelder identifiziert worden sind. Die deren Grenzen entsprechenden zeitlichen und/oder räumlichen Abstände T und/oder die den Grenzen zugeordneten Zeitstempel t, sowie den Rasterfeldern R zugeordneten Behandlungsorgane 5 sind dem System dann bekannt, sodass eine Ansteuerung durchführbar ist.

Ein geeigneter Steuerdatensatz kann insbesondere in Form einer Matrix oder einer Zeichenkette an die Steuereinheit übergeben werden. Dabei enthält ein solcher Steuerdatensatz für jedes Rasterfeld R einen Schaltzustand "0" oder "1". Die Kennung K des Rasterelements R ist in diesem Fall in der Position in der Matrix oder in der Stelle in der Zeichenkette codiert.

## Patentansprüche

1. Landwirtschaftliche Maschine zur bedarfsgerechten Pflanzenbehandlung, umfassend
- mehrere lateral zu einer Vortriebsrichtung angeordnete Behandlungsorgane,
- zumindest eine Erfassungseinrichtung zur Erfassung eines in Vortriebsrichtung vor den Behandlungsorganen befindlichen Flächenbereichs,
- eine Auswerteeinrichtung zur Auswertung von von der zumindest einen Erfassungseinrichtung erfassten Daten,
- eine Steuereinrichtung zur Ansteuerung der Behandlungsorgane, vorzugsweise basierend auf den von der Erfassungseinrichtung erfassten Daten, wobei die Auswerteeinrichtung konfiguriert ist,
- den von der Erfassungseinrichtung erfassten Flächenbereich in Unterbereiche zu unterteilen,
- zumindest einen Unterbereich zu identifizieren, in dem eine Ansteuerung zumindest eines Behandlungsorgans erforderlich ist,
**dadurch gekennzeichnet, dass**
die Auswerteeinrichtung konfiguriert ist,
- ausgehend von einem Ausgangspunkt, bevorzugt für jeden Unterbereich, besonders bevorzugt für jeden identifizierten Unterbereich einen zeitlichen und/oder räumlichen Abstand zu einem Punkt zu bestimmen, an dem eine Ansteuerung des zumindest einen Behandlungsorgans durchzuführen ist,
- alle definierten Punkte mit einer internen Systemzeit der Erfassungseinrichtung, der Auswerteeinrichtung und/oder der Steuereinrichtung abzugleichen,
dass die Unterbereiche lateral zu der Vortriebsrichtung angeordnet und/oder einem oder mehreren Behandlungsorganen zugeordnet sind,
dass die Unterbereiche den erfassten Flächenbereich vollständig überdecken, und
dass die Unterbereiche zumindest in lateraler Richtung gleiche Abmessungen aufweisen.

2. Maschine nach Anspruch 1, **dadurch gekennzeichnet, dass** die zumindest eine Erfassungseinrichtung als optische Erfassungseinrichtung, insbesondere als Kamera, ausgebildet ist und bevorzugt im infraroten, sichtbaren oder ultravioletten Spektralbereich arbeitet.

3. Maschine nach einem der vorstehenden Ansprüche, **dadurch gekennzeichnet, dass** der Ausgangspunkt den Zeitpunkt oder den Ort bezeichnet, an dem der vor den Behandlungsorganen befindliche Flächenbereich erfasst wird.

4. Maschine nach einem der vorstehenden Ansprüche, **dadurch gekennzeichnet, dass** die Auswerteeinrichtung konfiguriert ist, den von der Erfassungseinrichtung erfassten Flächenbereich in Intervalle zu unterteilen, wobei die Intervalle in Vortriebsrichtung angeordnet sind.

5. Maschine nach einem der vorstehenden Ansprüche, **dadurch gekennzeichnet, dass** der von der Erfassungseinrichtung erfasste Flächenbereich mittels lateral zur Vortriebsrichtung angeordneter Unterbereiche und mittels in Vortriebsrichtung angeordneter Intervalle ganzflächig in ein Raster gleichmäßiger Rasterfelder unterteilt ist, wobei die Rasterfelder lateral zur Vortriebsrichtung durch die Grenzen der Unterbereiche begrenzt sind und in Vortriebsrichtung durch die Grenzen der Intervalle.

6. Maschine nach einem der vorstehenden Ansprüche, **dadurch gekennzeichnet, dass** die Auswerteeinrichtung konfiguriert ist, zumindest ein Rasterfeld zu identifizieren, in dem eine Ansteuerung zumindest eines Behandlungsorgans erforderlich ist, und ausgehend von einem Ausgangspunkt einen zeitlichen und/oder räumlichen Abstand zu den in Vortriebsrichtung gelegenen Grenzen des zumindest einen Rasterfeld zu bestimmen.

7. Maschine nach einem der vorstehenden Ansprüche **dadurch gekennzeichnet, dass** die Steuereinrichtung konfiguriert ist, ausgehend von dem Ausgangspunkt zumindest ein Behandlungsorgan basierend auf zumindest einem der folgenden Parameter anzusteuern:
- zeitlicher und/oder räumlicher Abstand zu dem Punkt, an dem eine Ansteuerung des zumindest einen Behandlungsorgans durchzuführen ist;
- zeitlicher und/oder räumlicher Abstand zu den in Vortriebsrichtung gelegenen Grenzen zumindest eines Rasterfeldes, in dem eine Ansteuerung zumindest eines Behandlungsorgans erforderlich ist.

8. Maschine nach einem der vorstehenden Ansprüche, **dadurch gekennzeichnet, dass** die Auswerteeinrichtung konfiguriert ist, eine Kalibrierung durchzuführen, um Betriebsparameter der Auswerteeinrichtung und/oder der Steuereinrichtung zu verändern, wobei die Kalibrierung ausgelöst wird, wenn sich zumindest einer der folgenden Parameter über ein festgelegtes Maß hinaus ändert:
- relative Position und/oder Ausrichtung der Behandlungsorgane relativ zum vor den Behandlungsorganen befindlichen Flächenbereichs;
- relative Position und/oder Ausrichtung der zumindest einen Erfassungseinrichtung relativ zum vor den Behandlungsorganen befindlichen Flächenbereichs;
- Eigenschaften der verwendeten Behandlungsorgane;
- Vortriebsgeschwindigkeit und/oder Bewegungsrichtung der Behandlungsorgane und/oder der zumindest einen Erfassungseinrichtung;
- Drehraten und/oder Bahngeschwindigkeit der Behandlungsorgane und/oder der zumindest einen Erfassungseinrichtung.

9. Verfahren zur bedarfsgerechten Pflanzenbehandlung mittels einer landwirtschaftlichen Maschine, umfassend
- mehrere lateral zu einer Vortriebsrichtung angeordnete Behandlungsorgane,
- zumindest eine Erfassungseinrichtung zur Erfassung eines in Vortriebsrichtung vor den Behandlungsorganen befindlichen Flächenbereichs,
- eine Auswerteeinrichtung zur Auswertung von von der zumindest einen Erfassungseinrichtung erfassten Daten,
- eine Steuereinrichtung zur Ansteuerung der Behandlungsorgane, vorzugsweise basierend auf den von der Erfassungseinrichtung erfassten Daten, wobei der von der Erfassungseinrichtung erfasste Flächenbereich in Unterbereiche unterteilt wird, und zumindest ein Unterbereich identifiziert wird, in dem eine Ansteuerung zumindest eines Behandlungsorgans erforderlich ist, **dadurch gekennzeichnet, dass**
- ausgehend von einem Ausgangspunkt, bevorzugt für jeden Unterbereich, besonders bevorzugt für jeden identifizierten Unterbereich ein zeitlicher und/oder räumlicher Abstand zu einem Punkt bestimmt wird, an dem eine Ansteuerung des zumindest einen Behandlungsorgans durchzuführen ist,
- alle definierten Punkte mit einer internen Systemzeit der Erfassungseinrichtung, der Auswerteeinrichtung und/oder der Steuereinrichtung abgeglichen werden,
dass die Unterbereiche lateral zu der Vortriebsrichtung angeordnet und/oder einem oder mehreren Behandlungsorganen zugeordnet sind,
dass die Unterbereiche den erfassten Flächenbereich vollständig überdecken, und
dass die Unterbereiche zumindest in lateraler Richtung gleiche Abmessungen aufweisen.

10. Verfahren nach Anspruch 9, **dadurch gekennzeichnet, dass** die zumindest eine Erfassungseinrichtung als optische Erfassungseinrichtung, insbesondere als Kamera, ausgebildet ist und ein zweidimensionales Bild des in Vortriebsrichtung vor den Behandlungsorganen befindlichen Flächenbereichs erzeugt.

11. Verfahren nach einem der vorstehenden Ansprüche 9 oder 10, **dadurch gekennzeichnet, dass** der Ausgangspunkt den Zeitpunkt oder den Ort bezeichnet, an dem der vor den Behandlungsorganen befindliche Flächenbereich erfasst wird.

12. Verfahren nach einem der vorstehenden Ansprüche 9 bis 11, **dadurch gekennzeichnet, dass** der von der Erfassungseinrichtung erfasste Flächenbereich in Intervalle unterteilt wird, wobei die Intervalle in Vortriebsrichtung angeordnet sind.

13. Verfahren nach einem der vorstehenden Ansprüche 9 bis 12, **dadurch gekennzeichnet, dass** der von der Erfassungseinrichtung erfasste Flächenbereich mittels lateral zur Vortriebsrichtung angeordneter Unterbereiche und mittels in Vortriebsrichtung angeordneter Intervalle ganzflächig in ein Raster gleichmäßiger Rasterfelder unterteilt wird, wobei die Rasterfelder lateral zur Vortriebsrichtung durch die Grenzen der Unterbereiche und in Vortriebsrichtung durch die Grenzen der Intervalle begrenzt werden.

14. Verfahren nach einem der vorstehenden Ansprüche 9 bis 13, **dadurch gekennzeichnet, dass** zumindest ein Rasterfeld identifiziert wird, in dem eine Ansteuerung zumindest eines Behandlungsorgans erforderlich ist, und ausgehend von einem Ausgangspunkt ein zeitlicher und/oder räumlicher Abstand zu den in Vortriebsrichtung gelegenen Grenzen des zumindest einen Rasterfeld bestimmt wird.

15. Verfahren nach einem der vorstehenden Ansprüche 9 bis 14 **dadurch gekennzeichnet, dass** ausgehend von dem Ausgangspunkt ein zumindest ein Behandlungsorgan basierend auf zumindest einem der folgenden Parameter angesteuert wird:
- zeitlicher und/oder räumlicher Abstand zu dem Punkt, an dem eine Ansteuerung des zumindest einen Behandlungsorgans durchzuführen ist;
- zeitlicher und/oder räumlicher Abstand zu den in Vortriebsrichtung gelegenen Grenzen zumindest eines Rasterfeldes, in dem eine Ansteuerung zumindest eines Behandlungsorgans erforderlich ist.

16. Verfahren nach einem der vorstehenden Ansprüche 9 bis 15, **dadurch gekennzeichnet, dass** eine Kalibrierung durchgeführt wird, um Betriebsparameter der Auswerteeinrichtung und/oder der Steuereinrichtung zu verändern, wobei die Kalibrierung ausgelöst wird, wenn sich zumindest einer der folgenden Parameter über ein festgelegtes Maß hinaus ändert:
- relative Position und/oder Ausrichtung der Behandlungsorgane relativ zum vor den Behandlungsorganen befindlichen Flächenbereichs;
- relative Position und/oder Ausrichtung der zumindest einen Erfassungseinrichtung relativ zum vor den Behandlungsorganen befindlichen Flächenbereichs;
- Eigenschaften der verwendeten Behandlungsorgane;
- Vortriebsgeschwindigkeit und/oder Bewegungsrichtung der Behandlungsorgane und/oder der zumindest einen Erfassungseinrichtung;
- Drehraten und/oder Bahngeschwindigkeit der Behandlungsorgane und/oder der zumindest einen Erfassungseinrichtung.

## Claims

1. Agricultural machine for plant treatment as required, comprising
- a plurality of treatment elements arranged laterally to an advancing direction,
- at least one scanning device for scanning a surface region located in front of the treatment elements in the advancing direction,
- an evaluation device for evaluating data acquired by the at least one scanning device,
- a control device for actuating the treatment elements, preferably on the basis of the data acquired by the scanning device, wherein the evaluation device is configured to
- subdivide the surface region scanned by the scanning device into subregions,
- identify at least one sub-region in which actuation of at least one treatment element is required,
**characterized in that**
the evaluation device is configured to
- determine, starting from a starting point, preferably for each sub-region, particularly preferably for each identified sub-region, a temporal and/or spatial distance from a point at which actuation of the at least one treatment element is to be carried out,
- compare all defined points with an internal system time of the scanning device, the evaluation device and/or the control device,
**in that** the sub-regions are arranged laterally to the advancing direction and/or are associated with one or more treatment elements,
**in that** the sub-regions completely cover the scanned surface region, and
**in that** the sub-regions have the same dimensions at least in the lateral direction.

2. Machine according to claim 1, **characterized in that** the at least one scanning device is designed as an optical scanning device, in particular as a camera, and preferably operates in the infrared, visible or ultraviolet spectral range.

3. Machine according to any of the preceding claims, **characterized in that** the starting point denotes the point in time or the location at which the surface region located in front of the treatment elements is scanned.

4. Machine according to any of the preceding claims, **characterized in that** the evaluation device is configured to divide the surface region scanned by the scanning device into intervals, the intervals being arranged in the advancing direction.

5. Machine according to any of the preceding claims, **characterized in that** the surface region scanned by the scanning device is subdivided over the entire surface into a grid of uniform grid fields by means of sub-regions arranged laterally to the advancing direction and by means of intervals arranged in the advancing direction, the grid fields being delimited laterally to the advancing direction by the boundaries of the sub-regions and in the advancing direction by the boundaries of the intervals.

6. Machine according to any of the preceding claims, **characterized in that** the evaluation device is configured to identify at least one grid field in which actuation of at least one treatment element is required and, starting from a starting point, to determine a temporal and/or spatial distance from the boundaries of the at least one grid field which are located in the advancing direction.

7. Machine according to any of the preceding claims, **characterized in that** the control device is configured, starting from the starting point, to actuate at least one treatment element on the basis of at least one of the following parameters:
- temporal and/or spatial distance from the point at which actuation of the at least one treatment element is to be carried out;
- temporal and/or spatial distance from the boundaries, in the advancing direction, of at least one grid field in which actuation of at least one treatment element is required.

8. Machine according to any of the preceding claims, **characterized in that** the evaluation device is configured to carry out a calibration in order to change operating parameters of the evaluation device and/or the control device, the calibration being triggered when at least one of the following parameters changes beyond a defined amount:
- relative position and/or orientation of the treatment elements relative to the surface region located in front of the treatment elements;
- relative position and/or orientation of the at least one scanning device relative to the surface region located in front of the treatment elements;
- properties of the treatment elements used;
- advancing speed and/or movement direction of the treatment elements and/or of the at least one scanning device;
- rotation rates and/or path speed of the treatment elements and/or of the at least one scanning device.

9. Method for plant treatment as required by means of an agricultural machine, comprising
- a plurality of treatment elements arranged laterally to an advancing direction,
- at least one scanning device for scanning a surface region located in front of the treatment elements in the advancing direction,
- an evaluation device for evaluating data acquired by the at least one scanning device,
- a control device for actuating the treatment elements, preferably on the basis of the data acquired by the scanning device, wherein the surface region scanned by the scanning device is subdivided into sub-regions, and at least one sub-region is identified in which actuation of at least one treatment element is required,
**characterized in that**
- starting from a starting point, preferably for each sub-region, particularly preferably for each identified sub-region, a temporal and/or spatial distance from a point at which actuation of the at least one treatment element is to be carried out is determined,
- all defined points are compared with an internal system time of the scanning device, the evaluation device and/or the control device.
**In that** the sub-regions are arranged laterally to the advancing direction and/or are associated with one or more treatment elements,
**in that** the sub-regions completely cover the scanned surface region, and **in that** the sub-regions have the same dimensions at least in the lateral direction.

10. Method according to claim 9, **characterized in that** the at least one scanning device is designed as an optical scanning device, in particular as a camera, and a two-dimensional image of the surface region located in front of the treatment elements in the advancing direction is generated.

11. Machine according to any of the preceding claims 9 or 10, **characterized in that** the starting point denotes the point in time or the location at which the surface region located in front of the treatment elements is scanned.

12. Method according to any of the preceding claims 9 to 11, **characterized in that** the surface region scanned by the scanning device is divided into intervals, the intervals being arranged in the advancing direction.

13. Method according to any of the preceding claims 9 to 12, **characterized in that** the surface region scanned by the scanning device is subdivided over the entire surface into a grid of uniform grid fields by means of sub-regions arranged laterally to the advancing direction and by means of intervals arranged in the advancing direction, the grid fields being delimited laterally to the advancing direction by the boundaries of the sub-regions and in the advancing direction by the boundaries of the intervals.

14. Method according to any of the preceding claims 9 to 13, **characterized in that** at least one grid field is identified in which actuation of at least one treatment element is required and, starting from a starting point, a temporal and/or spatial distance from the boundaries of the at least one grid field which are located in the advancing direction is determined.

15. Method according to any of the preceding claims 9 to 14, **characterized in that,** starting from the starting point, an at least one treatment element is actuated on the basis of at least one of the following parameters:
- temporal and/or spatial distance from the point at which actuation of the at least one treatment element is to be carried out;
- temporal and/or spatial distance from the boundaries, in the advancing direction, of at least one grid field in which actuation of at least one treatment element is required.

16. Method according to any of the preceding claims 9 to 15, **characterized in that** a calibration is carried out in order to change operating parameters of the evaluation device and/or the control device, the collaboration being triggered when at least one of the following parameters changes beyond a defined amount:
- relative position and/or orientation of the treatment elements relative to the surface region located in front of the treatment elements;
- relative position and/or orientation of the at least one scanning device relative to the surface region located in front of the treatment elements;
- properties of the treatment elements used;
- advancing speed and/or movement direction of the treatment elements and/or of the at least one scanning device;
- rotation rates and/or path speed of the treatment elements and/or of the at least one scanning device.

## Revendications

1. Machine agricole pour le traitement des plantes en fonction des besoins, comprenant
- plusieurs organes de traitement disposés latéralement par rapport à une direction d'avancement,
- au moins un dispositif de détection permettant de détecter une zone de surface située en amont des organes de traitement dans la direction d'avancement,
- un dispositif d'évaluation permettant d'évaluer des données détectées par le au moins un dispositif de détection,
- un dispositif de commande permettant de commander les organes de traitement, de manière préférée en se basant sur les données détectées par le dispositif de détection, le dispositif d'évaluation étant configuré pour,
- diviser la zone de surface détectée par le dispositif de détection en sous-zones,
- identifier au moins une sous-zone au sein de laquelle une commande d'au moins un organe de traitement est nécessaire,
**caractérisée en ce que**
le dispositif d'évaluation est configuré pour,
- déterminer, à partir d'un point de départ, de manière préférée pour chaque sous-zone, de manière particulièrement préférée pour chaque sous-zone identifiée, une distance temporelle et/ou spatiale par rapport à un point au niveau duquel une commande du au moins un organe de traitement doit être effectuée,
- mettre en correspondance tous les points définis avec un temps de système interne du dispositif de détection, du dispositif d'évaluation et/ou du dispositif de commande, les sous-zones sont disposées latéralement par rapport à la direction d'avancement et/ou sont associées à un ou plusieurs organe(s) de traitement,
les sous-zones recouvrent complètement la zone de surface détectée et les sous-zones présentent les mêmes dimensions au moins dans la direction latérale.

2. Machine selon la revendication 1, **caractérisée en ce que** le au moins un dispositif de détection est réalisé sous la forme d'un dispositif de détection optique, en particulier sous la forme d'une caméra, et fonctionne de manière préférée dans le domaine spectral infrarouge, visible ou ultraviolet.

3. Machine selon l'une quelconque des revendications précédentes, **caractérisée en ce que** le point de départ désigne le moment ou l'endroit où la zone de surface située devant les organes de traitement est détectée.

4. Machine selon l'une quelconque des revendications précédentes, **caractérisée en ce que** le dispositif d'évaluation est configuré pour diviser la zone de surface détectée par le dispositif de détection en intervalles, les intervalles étant disposés dans la direction d'avancement.

5. Machine selon l'une quelconque des revendications précédentes, **caractérisée en ce que** la zone de surface détectée par le dispositif de détection est divisée sur toute la surface en une grille de champs de grille uniformes au moyen de sous-zones disposées latéralement par rapport à la direction d'avancement et au moyen d'intervalles disposés dans la direction d'avancement, les champs de grille étant délimités latéralement par rapport à la direction d'avancement par les limites des sous-zones et dans la direction d'avancement par les limites des intervalles.

6. Machine selon l'une quelconque des revendications précédentes, **caractérisée en ce que** le dispositif d'évaluation est configuré pour identifier au moins un champ de grille au sein duquel une commande d'au moins un organe de traitement est nécessaire et pour déterminer, à partir d'un point de départ, une distance temporelle et/ou spatiale par rapport aux limites, situées dans la direction d'avancement, du au moins un champ de grille.

7. Machine selon l'une quelconque des revendications précédentes, **caractérisée en ce que** le dispositif de commande est configuré pour commander, à partir du point de départ, au moins un organe de traitement en se basant sur au moins un des paramètres ci-dessous :
- la distance temporelle et/ou spatiale par rapport au point au niveau duquel une commande du au moins un organe de traitement doit être effectuée ;
- la distance temporelle et/ou spatiale par rapport aux limites, situées dans la direction d'avancement, d'au moins un champ de grille au sein duquel une commande d'au moins un organe de traitement est nécessaire.

8. Machine selon l'une quelconque des revendications précédentes, **caractérisée en ce que** le dispositif d'évaluation est configuré pour mettre en œuvre un calibrage afin de modifier les paramètres de fonctionnement du dispositif d'évaluation et/ou du dispositif de commande, le calibrage étant déclenché si au moins un des paramètres ci-dessous change au-delà d'un niveau défini :
- la position et/ou l'orientation relative des organes de traitement par rapport à la zone de surface située devant les organes de traitement ;
- la position et/ou l'orientation relative du au moins un dispositif de détection par rapport à la zone de surface située devant les organes de traitement ;
- les propriétés des organes de traitement utilisés ;
- la vitesse d'avancement et/ou la direction de déplacement des organes de traitement et/ou du au moins un dispositif de détection ;
- les vitesses angulaires et/ou la vitesse de bande des organes de traitement et/ou du au moins un dispositif de détection.

9. Procédé de traitement des plantes selon les besoins au moyen d'une machine agricole, comprenant
- plusieurs organes de traitement disposés latéralement par rapport à une direction d'avancement,
- au moins un dispositif de détection permettant de détecter une zone de surface située en amont des organes de traitement dans la direction d'avancement,
- un dispositif d'évaluation permettant d'évaluer des données détectées par le au moins un dispositif de détection,
- un dispositif de commande permettant de commander les organes de traitement, de manière préférée en se basant sur les données détectées par le dispositif de détection, la zone de surface détectée par le dispositif de saisie étant divisée en sous-zones, et au moins une sous-zone au sein de laquelle une commande d'au moins un organe de traitement est nécessaire étant identifiée, **caractérisé en ce que**
- à partir d'un point de départ, de manière préférée pour chaque sous-zone, de manière particulièrement préférée pour chaque sous-zone identifiée, une distance temporelle et/ou spatiale, par rapport à un point au niveau duquel une commande du au moins un organe de traitement doit être effectuée, est déterminée,
- tous les points définis sont mis en correspondance avec un temps de système interne du dispositif de détection, du dispositif d'évaluation et/ou du dispositif de commande,
les sous-zones sont disposées latéralement par rapport à la direction d'avancement et/ou sont associées à un ou plusieurs organe(s) de traitement,
les sous-zones recouvrent complètement la zone de surface détectée et les sous-zones présentent les mêmes dimensions au moins dans la direction latérale.

10. Procédé selon la revendication 9, **caractérisé en ce que** le au moins un dispositif de détection est réalisé sous la forme d'un dispositif de détection optique, en particulier sous la forme d'une caméra, et produit une image bidimensionnelle de la zone de surface située devant les organes de traitement dans la direction d'avancement.

11. Machine selon l'une quelconque des revendications précédentes, **caractérisée en ce que** le point de départ désigne le moment ou l'endroit où la zone de surface située devant les organes de traitement est détectée.

12. Procédé selon l'une quelconque des revendications précédentes 9 à 11, **caractérisé en ce que** la zone de surface détectée par le dispositif de détection est divisée en intervalles, les intervalles étant disposés dans la direction d'avancement.

13. Machine selon l'une quelconque des revendications précédentes, **caractérisée en ce que** la zone de surface détectée par le dispositif de détection est divisée sur toute la surface en une grille de champs de grille uniformes au moyen de sous-zones disposées latéralement par rapport à la direction d'avancement et au moyen d'intervalles disposés dans la direction d'avancement, les champs de grille étant délimités latéralement par rapport à la direction d'avancement par les limites des sous-zones et dans la direction d'avancement par les limites des intervalles.

14. Procédé selon l'une quelconque des revendications précédentes 9 à 13, **caractérisé en ce qu'**au moins un champ de grille, au sein duquel une commande d'au moins un organe de traitement est nécessaire, est identifiée et une distance temporelle et/ou spatiale par rapport aux limites situées dans la direction d'avancement du au moins un champ de grille est déterminé à partir d'un point de départ.

15. Procédé selon l'une quelconque des revendications précédentes 9 à 14, **caractérisé en ce que**, à partir du point de départ, au moins un organe de traitement est commandé en se basant sur au moins un des paramètres ci-dessous :
- la distance temporelle et/ou spatiale par rapport au point au niveau duquel une commande du au moins un organe de traitement doit être effectuée ;
- la distance temporelle et/ou spatiale par rapport aux limites, situées dans la direction d'avancement, d'au moins un champ de grille au sein duquel une commande d'au moins un organe de traitement est nécessaire.

16. Procédé selon l'une quelconque des revendications précédentes 9 à 15, **caractérisé en ce qu'**un calibrage est effectué afin de modifier des paramètres de fonctionnement du dispositif d'évaluation et/ou du dispositif de commande, le calibrage étant déclenché si au moins un des paramètres ci-dessous change au-delà d'un niveau défini :
- la position et/ou l'orientation relative des organes de traitement par rapport à la zone de surface située devant les organes de traitement ;
- la position et/ou l'orientation relative du au moins un dispositif de détection par rapport à la zone de surface située devant les organes de traitement ;
- les propriétés des organes de traitement utilisés ;
- la vitesse d'avancement et/ou la direction de déplacement des organes de traitement et/ou du au moins un dispositif de détection ;
- les vitesses angulaires et/ou la vitesse de bande des organes de traitement et/ou du au moins un dispositif de détection.
